# EUROPEAN PATENT APPLICATION

(11) **EP 4 104 719 A1**
(43) Date of publication of application: **21.12.2022**
(21) Application number: 20932939.0
(22) Date of filing: 19.08.2020
(51) Int. Cl.: A47J 31/44, A47J 31/00

(54) **ELASTIC ASSEMBLY AND TOP RESIDUE RESET ASSEMBLY FOR BEVERAGE BREWING APPARATUS, AND APPARATUS THEREOF**

(30) Priority: 30.04.2020 CN 202010365442
(71) Applicant: Suzhou Industrial Park Kalerm Electric Appliances Co., Ltd, Suzhou, Jiangsu 215000 (CN)
(72) Inventor: ZHU, Meisheng, Suzhou, Jiangsu 215000 (CN); WANG, Zhaoliang, Suzhou, Jiangsu 215000 (CN)
(74) Representative: ABG Intellectual Property Law, S.L.
(86) International application number: PCT/CN2020/110003
(87) International publication number: WO 2021/217961

(57) **Abstract**

A residue-ejecting and resetting assembly, applied to a beverage brewing apparatus, includes: an elastic assembly, and a limiting mechanism which is used with the elastic assembly; the limiting mechanism includes a limiting member (4) and a limiting member base (5) on which the limiting member (4) is mounted; the elastic assembly includes an elastic base (1), an elastic element (2), and blocking elements (3). Taking advantage of driving limitation of the elastic assembly when passing through the limiting member, combined the elastic hoop (2) of which the elasticity is controllable, the elastic assembly is displaced between set positions when moving downward and upward, and residue ejecting and reset functions of a lower piston (8) can be realized when the residue-ejecting and resetting assembly is used on a brewing apparatus of a fully automatic beverage machine.

## Description

### TECHNICAL FIELD

The present disclosure relates to a technical field of beverage preparation, in particular, to a residue-ejecting and resetting assembly and a beverage brewing apparatus.

### BACKGROUND

Modern beverage-producing equipment includes tea-brewing apparatus, coffee-brewing apparatus and so on. Take a coffee-brewing apparatus, for example. The coffee-brewing apparatus mainly includes an upper piston, a lower piston, and a brewing cylinder. A brewing chamber is defined by the upper piston, the lower piston, and the brewing cylinder. During a brewing process, hot water, under pressure, flows through coffee powder to form a coffee beverage, and then the coffee beverage is discharged through an outlet pipe. When the brewing process is completed, it is needed to remove the coffee residue to prepare for the next brewing process. In the related art, generally, through relative movement between the brewing cylinder and the lower piston mounted therein, the coffee residue is ejected out of the brewing chamber by the lower piston (namely, a residue-ejecting process), the coffee residue is removed, and the lower piston as well as the brewing cylinder are reset to a position where coffee powder can be added (namely, a resetting process), so that a whole brewing process is completed. In some beverage-brewing apparatus provided by the related art, such as coffee-brewing apparatus, the lower piston located in the brewing chamber is caused to move relative to the brewing chamber so as to perform the abovementioned residue-rejecting and resetting processes, that is, the lower piston pushes coffee residue up out of the brewing chamber, and the lower piston as well as the brewing cylinder are reset to a position where coffee powder can be added. In order to complete the abovementioned relative movement, the lower piston is mounted in the brewing cylinder in such a way that the lower piston is movable axially, and the relative movement between the lower piston and the brewing cylinder has an upper limit position and a lower limit position. When the lower piston is at the upper limit position of the relative movement between the lower piston and the brewing cylinder, an upper surface of the lower piston is substantially aligned with an upper opening of the brewing cylinder to complete the residue-ejecting process. When the lower piston moves to a bottom end of the brewing cylinder, the volume of the brewing cylinder is the largest, the lower piston is at the lower limit position of the relative movement between the lower piston and the brewing cylinder, so as to accommodate the coffee powder.

In the related art, during the residue-rejecting and resetting processes, in order to put the coffee residue up out of the brewing cylinder and reset the lower piston as well as the brewing cylinder, it is needed to cause the lower piston in the brewing cylinder to stop and/or to move relative to the cylinder. The structure realizing this function consists of a compressible protrusion generally made of flexible material on an inner surface of the lower piston of the coffee brewing apparatus and a limiting mechanism fixed on a frame of the coffee brewing apparatus. When the brewing cylinder is driven to move axially by the main driving shaft, the compressible protrusion made of the flexible material on the inner surface of the lower piston is combined with the limiting mechanism to block the movement of the lower piston to realize the relative movement between the lower piston and the brewing cylinder, thereby completing the above-mentioned residue-ejecting and resetting functions. Herein, an assembly playing a role of ejecting residue and resetting is defined as a residue-ejecting and resetting assembly, in the related art, the assembly consists of the flexible compressible protrusion of the inner surface of the lower piston and the limiting device on the frame. However, during frictional contact with the limiting mechanism, the abovementioned flexible compressible protrusion together with the limiting mechanism to block the movement of the lower piston has a problem, that is, serious wear occurs with the use time increasing, which affects the structural reliability, reduces the working stability and service life of components, and increases the cost of replacing components.

Given the above problem, it is necessary to research and develop a residue-ej ecting and resetting assembly and a beverage brewing apparatus with reliable and stable performance, long service life, simple structure, and relatively low cost.

### SUMMARY

In view of the above problem in the related art, at least one purpose of the present disclosure is to provide a residue-ejecting and resetting assembly applied to a beverage brewing apparatus with relatively simple structure, reliable performance, and longer service life, and provide a beverage brewing apparatus including the residue-ejecting and resetting assembly.

For achieving the abovementioned purpose, a technical solution provided by the present disclosure is as follows: a residue-ejecting and resetting assembly, applied to a beverage brewing apparatus, includes an elastic assembly provided on an inner surface of a lower piston of the beverage brewing apparatus and a limiting mechanism used with the elastic assembly; the elastic assembly matches the limiting mechanism to block the lower piston and/or to cause relative movement between the lower piston and the brewing cylinder; the limiting mechanism includes a limiting member made of rigid material and a limiting-member base on which the limiting member is mounted; the elastic assembly includes an elastic element, blocking elements, and an elastic base; the elastic base is used to fix the elastic element and the blocking elements in an inner cavity of the lower piston; the elastic element is mounted on an end side, which is an outer end side, of the blocking elements closer to an inner circumferential surface of the lower piston so as to apply an elastic force on the blocking elements; the blocking elements are made of rigid material; the blocking elements is capable of partially abutting against the limiting member during movement of the lower piston under the elastic force of the elastic element, or the blocking elements is capable of being displaced as a whole in the elastic base under the combined action of the elastic element and the limiting member made of rigid material, so as to block the lower piston and/or to cause relative movement between the lower piston and the brewing cylinder. Since the blocking elements and the limiting member are made of rigid material, obvious wear due to relative displacement during interaction is prevented, and the service life is prolonged. Additionally, to block the lower piston and/or to cause relative movement between the lower piston moves and the brewing cylinder is achieved by movement of the blocking elements as a whole under action of the elastic element, instead of by the deformation of the material of the blocking elements themselves. In this way, the whole structure is relatively simple, the performance is reliable, and the service life is longer.

Specifically, one specific embodiment of the elastic assembly may be that: the elastic base is formed with an inner cylindrical hole matching an outer circumferential surface of the limiting member and one or more radial through holes arranged in a circumferential direction of the elastic base; the blocking elements are respectively mounted in the radial through holes of the elastic base in such a way as to be radially movable; an end of each blocking element closer to the inner cylindrical hole is provided with a cambered surface portion, and an end of each radial through hole closer to the inner cylindrical an end thereof closer to the inner cylindrical hole, so that the elastic element abuts against an end, which is an outer end, of each blocking element closer to the inner surface of the lower piston to cause the cambered surface portion to radially protrude into the inner cylindrical hole; the limiting member is specifically configured as a rigid cam (hereinafter, the rigid cam is called as a limiting cam), and an outer diameter of the limiting cam matches the inner cylindrical hole of the elastic base; the blocking portion may be a protrusion provided in a radial direction along a cross section of each radial through hole, and it also acts to reduce the diameter of an end (that is, the inner end) of each radial through hole so as to keep the blocking elements from moving inward to a position where the blocking elements is disengaged from the elastic base. Of course, the blocking portion may also be realized in other forms, as long as it can block the blocking element. The positions of the blocking elements in the radial through holes are controlled by an elastic force applied on the blocking elements by the elastic element and an action force between the limiting cam and the blocking elements, so that the functions of blocking the lower piston and causing relative movement between the lower piston and the brewing cylinder are realized. The inner end of each blocking element has the cambered surface, so that it is in transitional contact with the limiting member, thereby reducing friction and wear of parts.

The working process will be described in detail below combined with a residue-ejecting and resetting process of a beverage apparatus. After extracting beverage, during a first movement in which the brewing cylinder drives the lower piston to move downward together, and the lower piston drives the elastic assembly to move downward together. At the moment, the brewing cylinder, the lower piston and the elastic assembly move at the same speed. A second movement starts when the blocking elements abuts against an upper surface (that is, an upper stop surface) of the limiting member (that is, a rigid limiting cam). At this moment, since the movement of the lower piston and the elastic assembly is blocked by the limiting member, the speed of the movement is reduced or the movement completely stops, but the brewing cylinder continues to move downward, consequently, the lower piston moves relative to the brewing cylinder. When the brewing cylinder moves relative to the lower piston to an upper limit position of the relative movement between the low piston and the brewing cylinder, that is, when an upper end surface of the lower piston is substantially flush with an upper end surface of the brewing cylinder, the brewing cylinder and the lower piston push the elastic member downward together under continuous driving of a drive unit of the beverage brewing apparatus, so that the cambered surface portion of each blocking element radially protruding into the inner cylindrical hole of the elastic assembly is partially or completely pressed into its corresponding radial through hole by the limiting cam, it is realized for the blocking elements to move radially as a whole under combined action of the elastic element and the limiting cam, and it is realized for the brewing cylinder and the lower piston to break through the obstacle of the limiting cam and perform a third movement in which the brewing cylinder and the lower piston move downward together. Of course, during the third movement, due to a friction between the blocking elements and the limiting member under the action of the elastic element, a resistance received at this moment is greater than the resistance received during the first movement. During the third movement of the brewing cylinder and the lower piston, removal of the beverage residues located on the upper surface of the lower piston is completed by a residue-unloading member.

Depended on various forms of the limiting cam, subsequent movement processes vary. The limiting cam herein comes into two forms according to different heights. The first form of the limiting cam is that: the height of the limiting cam is high enough, that is, when the brewing cylinder and the lower piston carrying the elastic assembly move to the lowest point, the lower surface of the limiting cam is still not reached. The second form of the limiting cam is that: the height of the limiting cam is smaller, the brewing cylinder and the lower piston carrying the elastic assembly move to the lower surface of the limiting cam first and then continue to move to the lowest point. In this case, it is considered that the limiting cam may have two stop surfaces, that is, the upper surface of the limiting cam is the upper stop surface, and the lower surface of the limiting cam is the lower stop surface. The maximum outer diameter of the stop surfaces is the maximum outer diameter of the limiting cam, and a diameter of the inner cylindrical hole of the elastic base is larger than the maximum outer diameter of the limiting cam.

For the first form of the limiting cam, in the process of the third movement of the brewing cylinder and the lower piston, when the lowest point is reached, the cambered surface portion of the blocking element radially protruding into the inner cylindrical hole is in a state in which the cambered surface portion is partially or completely pressed into the radial through hole. At this moment, the brewing cylinder, the lower piston and the elastic assembly have reached the lowest point and are in a static state, and there is friction between the blocking elements and the limiting member. A fourth movement occurs when the brewing cylinder starts to move upward under driving of the drive unit, at this moment, since the movement of the lower piston is blocked by the limiting cam, the speed of the movement of the lower piston increases slowly or the movement stops completely, but the brewing cylinder continues to move upward relatively quickly, so that the relative movement between the lower piston and the brewing cylinder is occurred. For the second form of the limiting cam, the brewing cylinder and the lower piston occurs the third movement together and pass through the limiting cam until reaching a position below the lower surface (that is, the lower stop surface) of the limiting cam. At this moment, because it get rid of the blocking of the limiting member, under an action force of the elastic element, the blocking element returns to the original position where the cambered surface portion radially protrudes into the inner cylindrical hole. Additionally, the brewing cylinder, the lower piston and the elastic assembly moves to the lowest point in this state, and then in a static state. After the brewing cylinder starts to move upward, a fourth movement occurs when the blocking elements contacts the lower surface (that is, the lower stop surface) of the limiting member (that is, the rigid limiting cam). At this moment, the speed of the movement of the lower piston is reduced or the movement completely stops due to the blocking by the limiting member, but the brewing cylinder continues to move upward, so that the lower piston moves relative to the brewing cylinder. No matter which form of the limiting cam mentioned above is adopted, when the brewing cylinder moves relative to the lower piston to the lower limit position of the relative movement between the lower piston and the brewing cylinder (that is, when the volume of the brewing cylinder is the largest), it is generally the position for filling powder. For the first form of the limiting cam, after filling, driven by the drive unit of the beverage brewing apparatus, the brewing cylinder drives the lower piston and the elastic assembly to overcome the obstruction of the limiting cam and be able to occur a fifth movement to move upward together. For the second form of the limiting cam, after filling, driven by the drive unit of the beverage brewing, the brewing cylinder and the lower piston push upward together, so that the cambered surface portion of the blocking element radially protruding into the inner cylindrical hole is partially or completely pressed into the radial through hole by the limiting cam, it is realized for the blocking elements to move as a whole under the action of the elastic element and the limiting cam, and it is realized for the brewing cylinder and the lower piston to break through the obstacle of the limiting cam and be able to occur the fifth movement to continue to move upward together. During the fifth movement process of the lower piston and the elastic assembly driven by the brewing cylinder, the three pass through the limiting cam until disengaging from the limiting cam. When the blocking elements are disengaged from the limiting cam, under the elastic force of the elastic element, the blocking element returns to its original position where the cambered surface portion radially protrudes into the inner cylindrical hole, and the brewing cylinder drives the lower piston and the elastic assembly upward together to form a brewing chamber with the upper piston to complete a coffee extraction. After extracting beverage, the next cycle is carried out, and the brewing cylinder carries the lower piston to move downward together to perform the first movement. With cooperation of the elastic assembly and the limiting mechanism, the lower piston gradually ejects the beverage residue out of the brewing chamber, or the lower piston and the brewing cylinder reset to a position for adding power, so that the combination of the elastic assembly and the limiting mechanism is called a residue-ejecting and resetting assembly. Herein, due to the elastic effect of the elastic element, when a thrust applied on the blocking elements by the limiting member is greater than the elastic force of the elastic element, the blocking elements moves radially outward. The elastic force between the blocking elements and the elastic element can be controlled and adjusted by parameters of the elastic element. The diameter of each radial through hole is not less than the maximum outer diameter of an outline of the blocking element, so that the blocking element can move in the radial through hole.

In some preferred embodiments, the above-mentioned second form of the limiting cam is adopted, that is, the limiting cam includes the upper stop surface and the lower stop surface. Preferably, the upper stop surface and the lower stop surface are conical surfaces. The conical surfaces are in contact with the blocking elements in a tangential transition fit way. The advantage of this configuration is that since the conical surfaces cooperate with the blocking elements, wear becomes smaller, and a driving force of the elastic assembly can be changed by changing angles of the conical surfaces so as to facilitate adjustment and control.

In order to improve the service life of the limiting cam and reduce the friction force between the blocking elements and the limiting member during the above-mentioned third movement or fifth movement of the lower piston and the elastic assembly driven by the brewing cylinder, preferably, part of the cylindrical surface between the upper stop surface and the lower stop surface of the limiting cam is a concave curved surface. The concave curved surface of the limiting cam enables the blocking element to be partially or completely restored under the action of the elastic element (that is, the cambered surface portion of the blocking element partially or completely radially protrudes into the inner cylindrical hole), so that the friction between the blocking element and the limiting is reduced, and the energy loss of driving the elastic assembly is reduced.

An inner surface of the elastic base defines an inner cylindrical hole matching an outer surface of the limiting member, and a diameter of the inner cylindrical hole is larger than the maximum outer diameter of the limiting member. The plurality of radial through holes are evenly arranged in the circumferential direction of the elastic base, and a circle defined by portions of the plurality of blocking elements protruding into the inner cylindrical hole is smaller than the maximum outer diameter of the limiting member. The configuration of the plurality of radial through holes and the blocking elements ensures a stable contact between the elastic assembly and the limiting member. The radial through holes provide a space for the blocking elements and the elastic element to move radially.

Herein, the blocking elements are preferably rigid balls, or the blocking elements are preferably rigid column bodies each of which is provided with a cambered surface portion at its end closer to the limiting member. The specific material of the blocking elements are preferably stainless steel. When a structure of a ball or a cambered surface is in contact with the upper stop surface or the lower stop surface of the limiting member, an inclined surface transition fit can be realized, and wear between parts is small.

In some embodiments, the elastic element includes springs respectively corresponding to the blocking elements. One end of each spring directly or indirectly abuts against the inner surface of the lower piston, and the other end abuts against the end, which is the outer end, of its corresponding blocking element closer to the inner surface of the lower piston. Each spring is compressed so as to cause its corresponding blocking element to partially protrude into the inner cylindrical hole of the elastic base. The elastic base is fixedly mounted on the inner cylindrical surface of the lower piston, an outer end of each spring abuts against the inner cylindrical surface of the lower piston, and the other end abuts against an end, which is an outer end, of its corresponding blocking element away from the inner cylindrical hole.

In some embodiments, the elastic element is preferably an elastic hoop, and the elastic hoop may be a split ring, which abuts against the outer end of the plurality of blocking elements so that the plurality of blocking elements abut against inner ends of the radial through holes for accommodating them and partially protrude into the inner cylindrical hole. An circumferential groove which is concave inward is formed on an outer circumferential surface of the elastic base, the groove is used for receiving the elastic hoop, and the radial through holes are provided at the circumferential groove. The elastic hoop mounted in the circumferential groove keeps the blocking elements in the radial through holes. An axial key groove is provided on the outer circumferential surface of the elastic base, and the axial key groove is used for a liquid pipeline to pass through. Preferably, two vertical sidewalls of the key groove of the elastic base extend outward to protrude from an outer surface of the elastic base to form a blocking flange.

Under normal circumstances, in various application places, the sizes of the brewing chamber, the upper piston, and the lower piston vary for matching various amount of the beverage powder. In a case that the size of the elastic assembly is certain, in order to facilitate assembling and disassembling the elastic assembly, a stop elastic base is added between the elastic assembly and the lower piston, and the elastic assembly is indirectly mounted in the cavity of the lower piston through the stop elastic base. Consequently, in a case that the size of the elastic assembly is certain, it is only necessary to replace the stop elastic base to realize that the elastic assembly of the same size is suitable for various beverage machines. The stop elastic base may be a hollow cylindrical structure formed by closing two semi-cylinders, a cavity that matches the elastic assembly and accommodates the elastic assembly is provided in the hollow cylindrical structure, and the elastic assembly is fixed in the cavity of the lower piston by closing and fixing the two semi-cylinders. The stop elastic base keeps the elastic assembly from rolling circumferentially and moving axially. Preferably, the stop elastic base is formed by closing two semi-cylinders. The advantages of this pivoting structure that: the structure is simple and flexible, and the elastic assembly, the stop elastic base as well as the lower piston are easy to assemble and disassemble.

In addition, the limiting member is rotatably mounted on the limiting member base. Axial and radial gaps are provided between the limiting member and the limiting member base to ensure that the limiting member can adaptively rotate relative to the limiting member base during a contact process of the limiting member with the elastic assembly on the lower piston of the beverage brewing apparatus. Compared with an assembly way adopting fixed installation, when the limiting member and the limiting member base are combined, some appropriate clearances are designed so that the limiting member is mounted on the limiting member base of the frame with a certain rotational degree of freedom. When the elastic assembly moves axially and makes contact with the limiting member, the limiting member will rotate slightly under an action of a thrust applied by the elastic assembly. Although the rotation angle is small, it will change the position where friction occurs at each contact, which means that each time the position where friction occurs is not the same as the last, so that the blocking elements will not wear the same positions all the time. It has been verified that this configuration can significantly improve the service life of the limiting member.

In order to achieve the purpose of the present disclosure, a beverage brewing apparatus is provided. The beverage brewing apparatus includes a frame, an upper piston, a brewing cylinder, a lower piston, and a main driving shaft. The upper piston is directly or indirectly fixed on the frame. The main driving shaft is rotatably supported by the frame. The brewing cylinder is mounted on the main driving shaft, and the lower piston is mounted in the brewing cylinder. The upper piston and the lower piston can close the brewing cylinder to form a brewing chamber driven by the main driving shaft. Relative movement between the lower piston and the brewing cylinder is provided with an upper limit position and a lower limit position. The beverage brewing apparatus also includes the abovementioned residue-ejecting and resetting assembly of the present disclosure, and the limiting member base of the residue-ejecting and resetting assembly is mounted on a lower end of the frame. The beverage brewing apparatus has a simple structure, high reliability and long service life.

Under normal circumstances, the limit position of the upward movement of the lower piston relative to the brewing cylinder is defined by a flange provided at a bottom of the lower piston cooperating with a limiting ring. In the present disclosure, a circumferential surface of a hollow cylinder of the lower piston is provided with an mounting hole for mounting a limiting clamp, and the limiting clamp protrudes from an outer circumferential surface of the lower piston to form a limiting flange for blocking an bottom end surface of the brewing cylinder, so that the lower piston is at the upper limit position of the movement of the lower piston relative to the brewing cylinder , thereby preventing the lower piston from being disengaged from the brewing cylinder by moving upward. Further, the limiting clamp is embedded into the mounting hole to fix the elastic assembly. Using the limiting clamp and the mounting hole not only can fix the elastic assembly in the cavity of the lower piston, but also can defined the limit position of the upward movement of the lower piston relative to the brewing cylinder. In this way, the structure is simple, assemble and disassemble is easy. The limiting clamp is elastic, such that it is easy to mount it on and remove it from the lower piston.

Compared with the related art, the present disclosure has the following beneficial effects:
(1) The residue-ejecting and resetting assembly of the present disclosure includes radially movable blocking elements that cooperates with a limiting member to realize a stop of the lower piston; compared with existing residue-ejecting and resetting assembly, the structure of the residue-ejecting and resetting assembly of the present disclosure is simple, and the blocking elements are compressed or return to original state by the control of the elastic force of the elastic element; this configuration improves the wear resistance and working reliability, as compared to compression and restore of the flexible material itself; the force driving the blocking elements can be controlled by controlling the elastic force of the elastic element.
(2) The limiting member is provided with the upper and lower stop surfaces which can be defined to correspond to a residue-ejecting point and a resetting point respectively; the stop surfaces are conical surfaces that are in tangential contact with the rigid blocking elements, so that the cooperation is reliable and the wear of parts is small; the driving force of the elastic assembly can be changed by adjusting the angle of the conical surfaces; the middle portion of the body of the limiting member has a concave curved surface, so that the rigid blocking elements can be reset to a certain extent when passing through the body of the limiting member , the frictional resistance is reduced when the elastic assembly is passing through, and drive energy consumption and the wear of the rigid parts are reduced.
(3) The limiting member is mounted on the limiting-member base of the frame with a certain rotational degree of freedom; when the blocking elements contacts the limiting member, under a certain thrust, it can be rotate adaptively to change the position where friction occurs, so that the limiting member will not be worn at the same positions by the steel balls all the time, thereby increasing the service life of the limiting member.
(4) Compared with the traditional way of fixing the elastic assembly on the low piston by means of interference fit or a screw, in the present disclosure, the stop elastic base formed by two semi-cylinders is used to limit the axial and circumferential position of the elastic assembly, so that the structure is simple and reliable, and the assembly is convenient and quick.

### BRIEF DESCRIPTION OF DRAWINGS

FIG. 1 shows an assembled view and an exploded view of an elastic assembly according to embodiment 1 of the present disclosure; FIG. 1A is an assembled view of the elastic assembly, and FIG. 1B is an exploded view of the elastic assembly.
FIG. 2 shows an exploded view and a sectional view of the elastic assembly and a limiting member according to embodiment 1; FIG. 2A is an exploded view of the elastic assembly and the limiting member; FIG. 2B is a sectional view of the elastic assembly and the limiting member.
FIG. 3 is a schematic structural view of an elastic base of the elastic assembly according to embodiment 1.
FIG. 4 is an assembled perspective view of the elastic assembly, a stop elastic base and a lower piston according to embodiment 1.
FIG. 5 is a sectional view of a coffee brewing apparatus in a step of just filling coffee powder into a brewing cylinder according to embodiment 1.
FIG. 6 is a sectional view of the brewing apparatus with a closed brewing chamber during brewing coffee.
FIG. 7 is a sectional view of the brewing apparatus, wherein the brewing chamber is open and the lower piston starts to eject residue.
FIG. 8 is a sectional view of the brewing apparatus, wherein coffee residue is ejected out of the brewing chamber.
FIG. 9 is a sectional view shows that steel balls of the elastic assembly pass through a body of a limiting cam during a process of ejecting residue.
FIG. 10 is a sectional view of the brewing apparatus when coffee residue is completely scraped off by a residue-unloading member.
FIG. 11 is a sectional view of the brewing apparatus with the lower piston returning to a ready state.
FIG. 12 is an axonometric view of the brewing apparatus in a filling position.
FIG. 13 is an axonometric view of the brewing cylinder of the brewing apparatus at the lowest position.
FIG. 14 is a sectional view shows that the steel balls of the elastic assembly radially passes through the body of the limiting cam.
FIG. 15A-15C are schematic structural views of a stop elastic base in an open state and a closed state according to embodiment 2.
FIG. 16 is a schematic structural view of a limiting clamp according to embodiment 2.
FIG. 17A and 17B are exploded view and assembled view of the limiting clamp, the stop elastic base, an elastic assembly and a lower piston according to embodiment 2.
FIG. 18A and 18B are schematic assembled views of the stop elastic base, the lower piston and a brewing cylinder according to embodiment 2 taken from different viewing angles.
FIG. 19A and 19B are sectional views of the elastic assembly, the limiting clamp and the stop elastic base in which the lower piston is located at two limit positions of a axial movement relative to the brewing cylinder according to embodiment 2.
FIG. 20 is a partial sectional view of a brewing apparatus in which an elastic element includes springs according to embodiment 3.
FIG. 21 shows an exploded view of an elastic assembly in which an elastic element includes springs and a schematic structural view of a lower piston according to embodiment 3.
FIG. 22 is a sectional view of a brewing apparatus according to embodiment 4, wherein a blocking elements are column bodies.
FIG. 23 shows an exploded view of an elastic assembly in which an elastic element includes springs and blocking elements are column bodies and a schematic structural view of a lower piston according to embodiment 4.
FIG. 24 is a schematic view of assembling and fixation of a limiting cam and a limiting cam base according to embodiment 5, wherein a certain rotational degree of freedom can be maintained.
FIG. 25 shows a schematic view and a partial enlarged view according to embodiment 5 illustrating that steel balls are not in contact with a stop face of a limiting member at the same time.
FIG. 26 is a schematic view of the limiting cam which has been worn according to embodiment 5.

### DETAILED DESCRIPTION OF THE EMBODIMENTS

The following are specific embodiments of the present disclosure, the technical solutions of the present disclosure is further described with reference to the accompanying drawings, but the present disclosure is not limited to these embodiments.

In the description of the present disclosure, it should be understood that, the orientation or positional relationship indicated by the terms "upper", "lower", "left", "right", "vertical", "horizontal", "top", "bottom", "inner", "outer", etc., are based on the orientation or positional relationship shown in the accompanying drawings, which is only for the convenience of describing the present disclosure and simplifying the description, rather than indicating or implying the specific orientation, construction and operation by the specific orientation in which referred apparatus or element must have, therefore, it can not be understood as a limitation of the present disclosure.

The following embodiments introduce a residue-ejecting and resetting assembly applied to a beverage brewing apparatus, and the details are described below.

### Embodiment 1

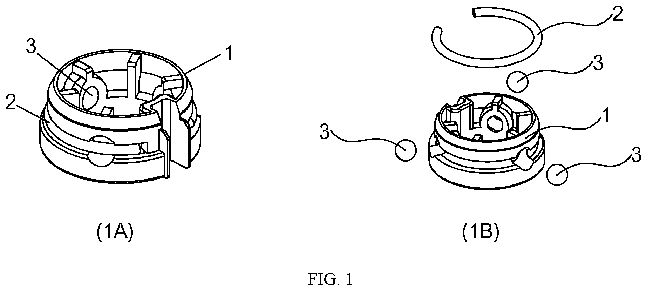

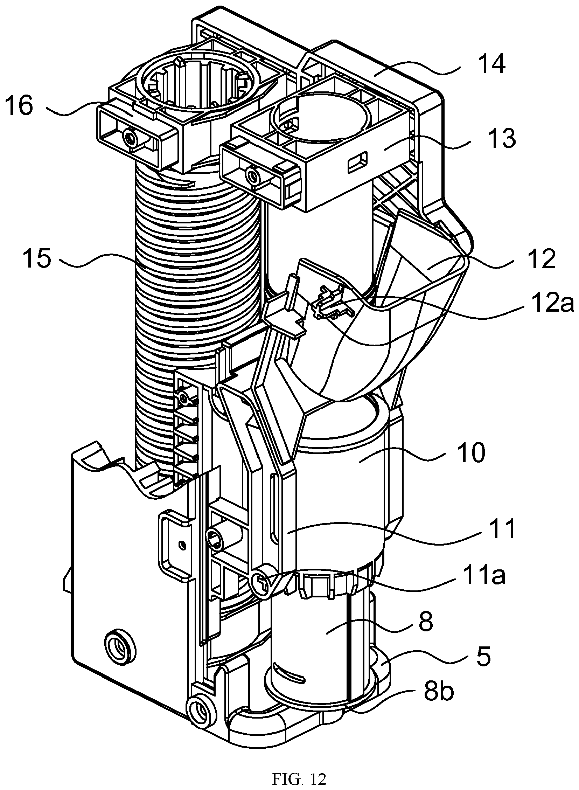

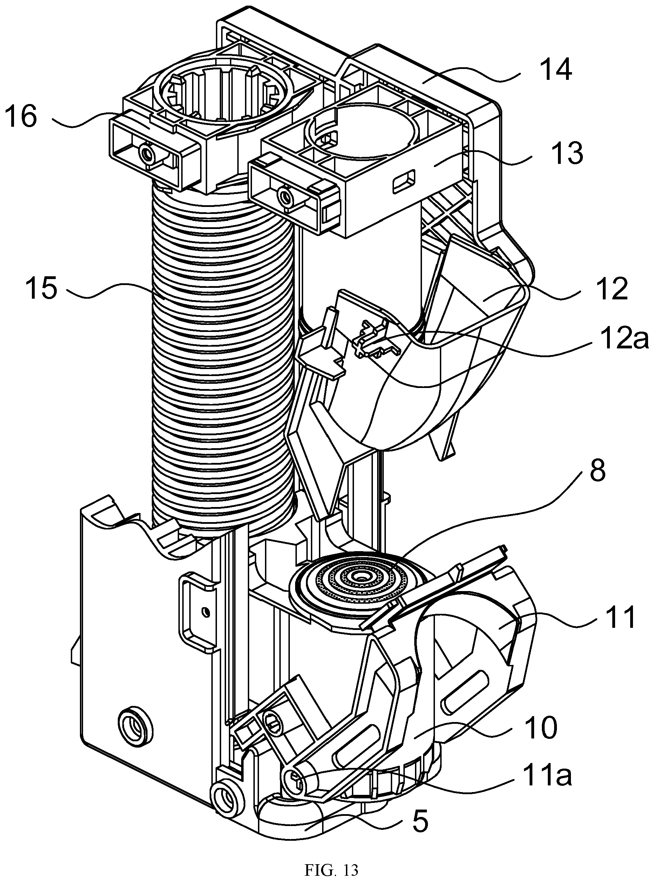

As show in FIGS. 1 to 14, a coffee brewing apparatus includes an upper piston 13 retained in a frame 14. The upper piston 13 and a brewing cylinder 10 are coaxially arranged, and the brewing cylinder 10 is axially movable relative to the upper piston 13. A lower piston 8 is mounted in a cylindrical hole of the brewing cylinder 10, and the lower piston 8 is also axially movable relative to the brewing cylinder 10. Relative movement between the lower piston 8 and the brewing cylinder 10 is provided with an upper limit position and a lower limit position. The lower piston 8 is provided with a lower-limit-position portion 8a and an upper-limit-position portion 8b, a step surface is formed in the cylindrical hole of the brewing cylinder, and the step surface is used to limit the lower piston 8 in the cylindrical hole of the brewing cylinder 10, so that when an end surface (namely, the lower-limit-position portion 8a) of a head portion of the lower piston 8 abuts against the step surface, the lower piston 8 is located at the lowest position (namely, the lower limit position) relative to the brewing cylinder 10. An outer circumferential surface of a bottom end of the lower piston 8 is provided with a flange as the upper-limit-position portion 8b, which is used to prevent the lower piston from being disengaged from a cavity of the brewing cylinder by moving upward. When the lower piston is at the highest position (namely, the upper limit position) relative to the brewing cylinder, the flange abuts against an end surface of a bottom end of the brewing cylinder. The brewing cylinder 10 is provided with a threaded portion which is close to a driving screw. The threaded portion is engaged with the driving screw 15. The driving screw 15 is rotatably fixed in the frame 14. Each of two ends of the driving screw 15 is provided with a shaft sleeve 16, and the shaft sleeve is rigidly retained in the frame 14. The driving screw 15 can rotate clockwise and counterclockwise under driving. During positive rotation or negative rotation, the driving screw 15 drives the brewing cylinder 10 to move upward or downward axially. In this embodiment, a residue-unloading member 11 is attached to the brewing cylinder 10 in such a way as to be rotatable around a rotation shaft 11a. The coffee powder channel 12 is retained on the frame 14 in such a way as to be rotatable around a rotation shaft 12a.

The brewing apparatus also includes a limiting mechanism mounted on the frame 14 and an elastic assembly used with the limiting mechanism. The limiting mechanism is matches the elastic assembly to block movement of the lower piston 8 and/or to cause relative movement between the lower piston 8 and the brewing cylinder 10, so as to achieve the functions of ejecting residue and resetting to a position for adding coffee powder. Accordingly, the combination of the limiting mechanism and the elastic assembly is defined as a residue-ejecting and resetting assembly. The limiting mechanism includes a limiting member made of rigid material and a limiting-member base on which the limiting member is mounted. The limiting member may be specifically a rigid cam, that is, a limiting cam. There are two forms of the limiting cam according to the height thereof. The limiting cam, in this embodiment, is the second form mentioned in the section of "SUMMARY", that is, it is the limiting cam 4 with a smaller height including an upper stop surface and a lower stop surface. For purposes such as brevity, the discussion will not be repeated.

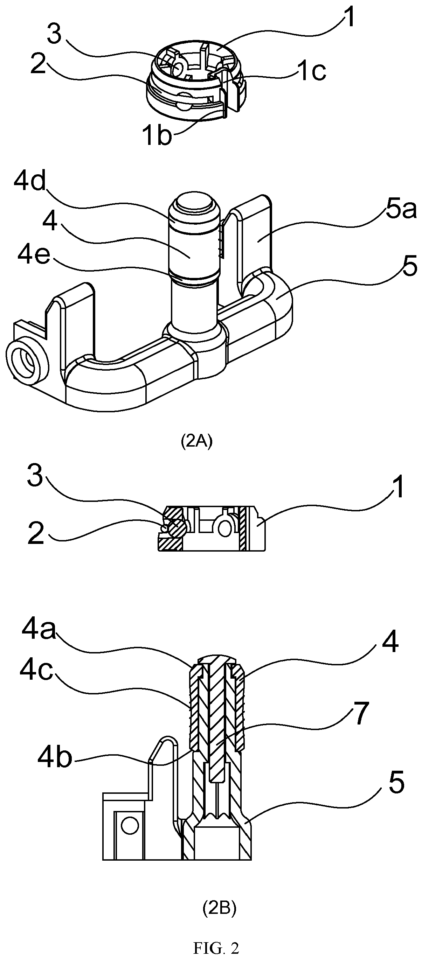

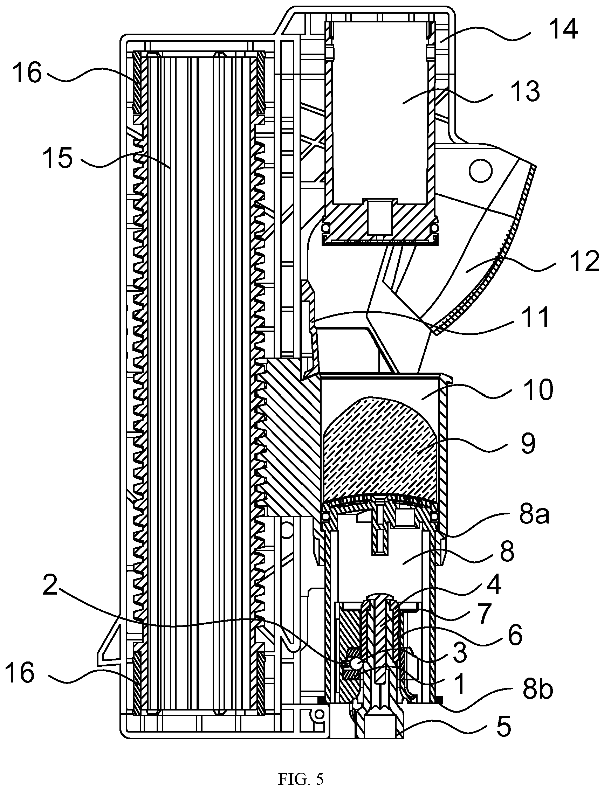

As shown in FIGS. 2 and 5, the limiting-member base, namely a cam base 5, is retained at a lower end of the frame 14, the limiting cam 4 is firmly fixed to the cam base 5 by a bolt 7. The limiting cam 4 and the brewing cylinder 10 are coaxially arranged along a vertical axis. The upper stop surface 4a and the lower stop surface 4b of the limiting cam 4, in this embodiment, are conical surfaces.

The limiting mechanism is used together with the elastic assembly, the elastic assembly is shown in FIG. 1A. As shown in FIG. 1B, the elastic assembly includes an elastic base 1, an elastic element (namely, an elastic hoop 2) and blocking elements (namely, steel balls 3). As a preferred embodiment of the elastic assembly, as shown in FIGS. 1-3, the elastic base 1 is of an annular shape, and the elastic base 1 is provided with an inner cylindrical hole 1a matching an outer surface of the limiting cam 4. Three radial through holes are provided in the elastic base 1, and are evenly arranged in the circumferential direction of the elastic base 1. A circumferential groove 1d is provided on an outer circumferential surface of the elastic base 1, and the circumferential groove is of a C-shape. The radial through holes are provided at the circumferential groove 1d. The diameter of each radial through hole is not less than the diameter of its corresponding steel ball 3, so that each steel ball is movable in its corresponding radial through hole. The diameter of each radial through hole reduces at its inner end (namely, an end closer to the inner cylindrical hole 1a of the elastic base 1), in this embodiment. Of course, a blocking portion may be provided, by which the diameter of the inner end of each radial through hole is slightly less than the diameter of its corresponding steel ball 3, so that its corresponding steel ball 3 will not disengaged from the inside of the elastic base 1. The diameter of the inner cylindrical hole of the elastic base 1 is greater than the maximum outer diameter of the limiting cam 4. The diameter of a circle defined by the innermost ends of portions of the three steel balls protruding into the inner cylindrical hole of the elastic base 1 is less than the maximum outer diameter of the limiting cam. The split elastic hoop 2 is located in the circumferential groove 1d. Under the action of the elastic hoop, each steel ball 3 presses against the edge of the inner end of the radial through hole in which it is accommodated, so that the inner end of each steel ball 3 radially protrudes into the inner cylindrical hole 1a.

The elastic hoop 2 has elasticity. When the inner ends of the steel balls 3 are pushed, the steel balls 3 can push the elastic hoop 2, such that the steel balls 3 as a whole elastically radially move outward (the radial through holes provide a space for the elastic hoop and the steel balls to move radially).

The blocking elements (that is, the steel balls 3) can partially abut against the limiting cam 4 during movement of the lower piston 8 under the elastic force of the elastic element (that is, the elastic hoop 2), or the blocking elements (that is, the steel balls 3) can be displaced as a whole in the elastic base 1 under combined action of the elastic element (that is, the elastic hoop 2) and the limiting cam 4 made of rigid material, so as to block the lower piston and/or to cause relative movement between the lower piston and the brewing cylinder, thereby achieving that the lower piston ejects the coffee residue out of the brewing cylinder and that the lower piston is reset to a position for adding coffee powder, that is, achieving the functions of ejecting residue and resetting to a position for adding coffee powder. Through driving limitation by the upper stop surface 4a and the lower stop surface 4b of the limiting cam 4, combined the elastic hoop 2 of which the elasticity is controllable, the elastic assembly is displaced between set positions when moving downward and upward, so as to achieve the functions of ejecting residue and resetting.

As shown in FIG. 2, in this embodiment, the specific structure of the limiting cam 4 is that: an outer edge of an upper end surface of the limiting cam 4 is inclined outward so as to form the upper stop surface 4a which is inclined, and an outer edge of a lower end surface of the limiting cam is inclined upward so as to form the lower stop surface 4b which is inclined. Between the upper stop surface and lower stop surfaces is a body of a limiting cam. An outer edge of a lower end of the upper stop surface 4a upwardly forms an upper cylindrical surface 4d, and an outer edge of a lower end of the lower stop surface downwardly forms a lower cylindrical surface 4e.

An inward concave curved surface 4c is formed between the upper cylindrical surface and the lower cylindrical surface, by which the friction is reduced when the elastic assembly passes through the body of the limiting cam 4. Of course, the limiting cam herein may also be a smooth cylinder, upper and lower end surfaces of the smooth cylinder are respectively the upper stop surface and the lower stop surface.

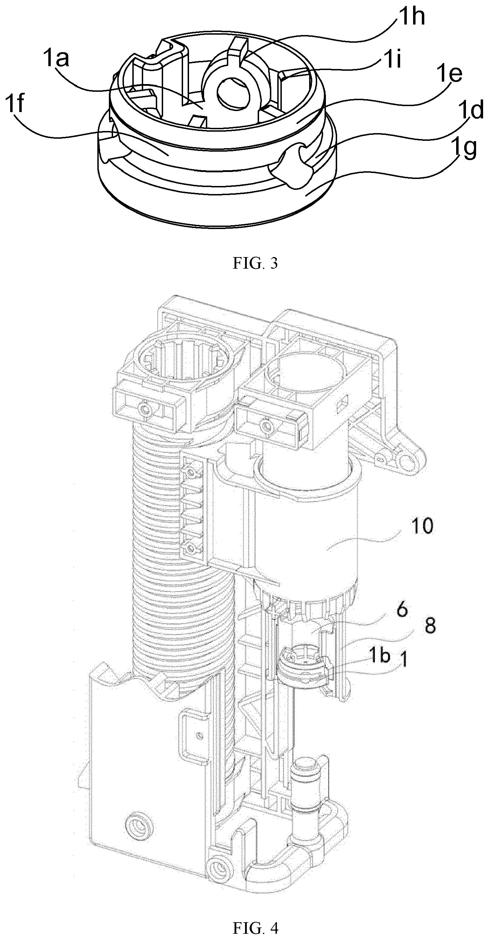

The specific structure of the elastic base 1 of this embodiment will be described below. As shown in FIG. 2A, a key groove 1c is axially provided on the outer circumferential surface of the elastic base 1 at the two ends of the C-shaped circumferential groove. The key groove is used for a liquid pipeline to pass through. The two vertical sidewalls of the key groove extend outward and protrude from the outer surface of the elastic base to form a blocking flange 1b. As shown in FIGS. 2 and 3, a preferred structure of the elastic base is shown, the elastic base 1, from top to bottom in sequence, includes a frustum 1e, a first boss If, and a second boss 1g. The first boss 1e is located above the second boss 1g, and its outer diameter is less than the outer diameter of the second boss 1g. The frustum 1e is formed above the first boss If, and the outer diameter of the larger end of the frustum 1e is equal to the outer diameter of the first boss 1f. Though the elastic base 1 with this structure, it is convenient for mounting the split elastic hoop 2. The inner surfaces of the frustum 1e, the first boss If, and the second boss 1g form the inner cylindrical hole 1a corresponding to the outer surface of the limiting cam 4. The groove 1d with an opening facing outward in the circumferential direction is formed at the bottom end of the first boss 1e adjacent to the second boss 1g. The groove is not closed in the circumferential direction, and both ends of the groove are stopped near the both sidewalls of the key groove 1c. The groove 1d is used for receiving the elastic hoop 2, and the elastic hoop 2 is located at the border between the first boss If and the second boss 1g.

The radial through holes radially penetrate the groove 1d at the border between the first boss If and the second boss 1g, and the diameter of each radial through hole is larger than the dimension of the groove measured in an axial direction of the elastic base. The inner cylindrical hole 1a matching the outer circumferential surface of the limiting cam 4 is defined by the elastic base 1. Specifically, the inner cylindrical hole 1a is defined by steel ball holding seats 1h, radical bars, and an inner cylindrical surface of the second boss 1g. Here, the steel ball holding seats 1h and the radical bars are formed, at intervals, on an inner cylindrical surface provided the combination of the frustum 1e and the first boss If.

The elastic assembly is coaxially fixed in a cavity of the lower piston 8 through a stop elastic base 6. The stop elastic base 6 is provided with a cavity matching the elastic assembly and accommodating the elastic assembly. As shown in FIGS. 4 and 5, an annular groove is provided on an inner circumferential surface of the stop elastic base 6, the annular groove is opposite to the elastic hoop 2 and provides a space for the elastic hoop 2 to move when the diameter of the elastic hoop increases. The stop flange 1b of the elastic base 1 are embedded in the stop elastic base 6, and the stop flange 1b abut against a circumferential surface of the stop elastic base 6 at a position where a groove of the stop elastic base 6 for a liquid pipeline to pass through is located.

The elastic assembly can be fixed to the lower piston through the stop elastic base 6 in a conventional way, e.g., using a screw.

Under normal circumstances, in various application places, the sizes of the brewing chamber, the upper piston, and the lower piston vary for matching various amount of the beverage powder. In a case that the size of the elastic assembly is certain, in order to facilitate assembling and disassembling the elastic assembly, a stop elastic base 6 is added between the elastic assembly and the lower piston 8, and the elastic assembly is indirectly mounted in the cavity of the lower piston through the stop elastic base 6. Consequently, in a case that the size of the elastic assembly is certain, it is only necessary to replace the stop elastic base 6 to realize that the elastic assembly of the same size is suitable for various beverage machines.

Basic components of the brewing apparatus have been introduced above, and the working principle of the residue-ejecting resetting assembly is described below through the working process.

As shown in FIG. 5, the brewing apparatus is in a filled position. At this moment, the brewing cylinder 10 is in a READY position, the lower piston 8 is at the lowest position relative to the brewing cylinder 10, the elastic assembly is located at a position lower that the lower stop surface 4b of the limiting cam 4, the steel ball 3 is in tangential contact with the lower stop surface 4b, the lower-limit-position portion 8a of the lower piston 8 abuts against a step surface provided in a hole of the brewing cylinder 10 so as to close the lower end of the brewing cylinder 10 to form the brewing chamber, a residue-unloading member 11 is located on an inner side of the brewing cylinder 10, and coffee powder 9 can be added into a circular hole of the brewing cylinder from a coffee powder passage 12.

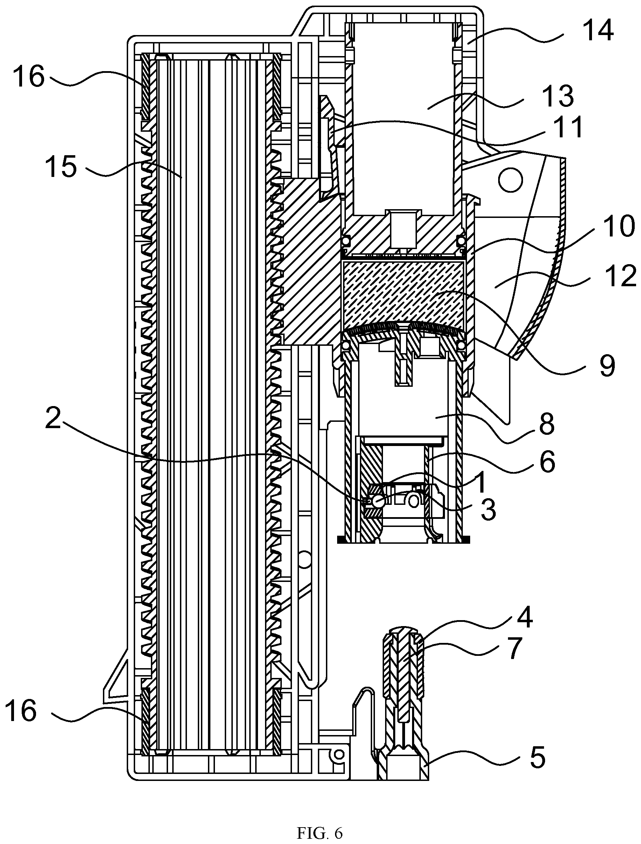

As shown in FIG. 6, the driving screw 15 rotates clockwise to drive the brewing cylinder 10 to move upward axially, this is the fifth movement mentioned in the section of "SUMMARY". At this moment, the lower piston 8 is located at the lower limit position of its movement relative to the brewing cylinder 10, and the lower piston 8 can be driven by the brewing cylinder 10 to move upward axially together with the brewing cylinder 10. Since the value of the force caused by the axial movement of the brewing cylinder 10 is greater than the resistance on the elastic assembly, the steel balls 3 of the elastic assembly moves radially under an elastic action of the elastic hoop 12 so as to pass through the limiting cam 4 and move upward until the brewing cylinder 10 is closed by the upper piston 13. At this moment, the coffee powder 9 is pressed by the upper piston 13, a sealed brewing chamber is formed, and coffee is being making.

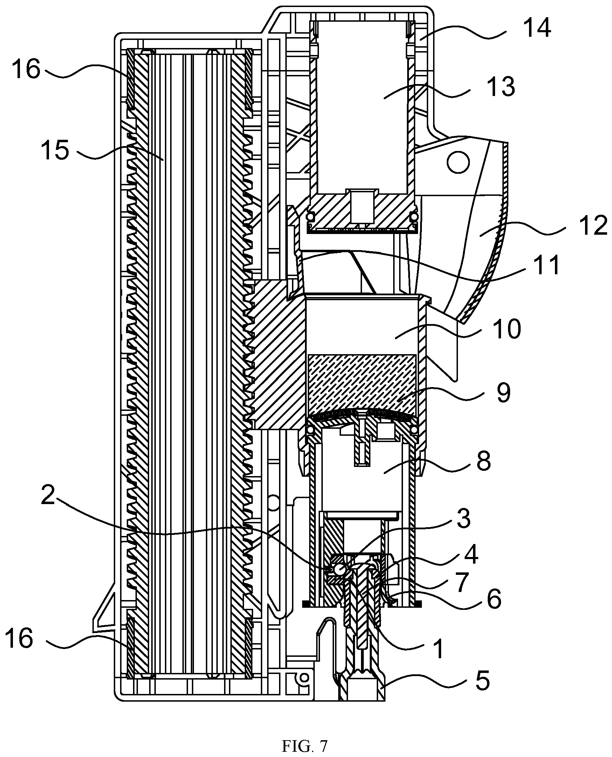

As shown in FIG. 7, after the coffee is made, the driving screw 15 rotates counterclockwise to drive the brewing cylinder 10 to move axially downward, and the upper piston 13 is disengaged from the brewing cylinder 10, so that the upper end of the brewing cylinder is in an open state. Additionally, at this moment, the lower piston 8 moves axially downward together with the brewing cylinder 10, this is the first movement mentioned in the section of "SUMMARY". Additionally, at this moment, the steel balls 3 of the elastic assembly at the lower end of the lower piston 8 is in contact with the upper stop surface 4a of the limiting cam 4.

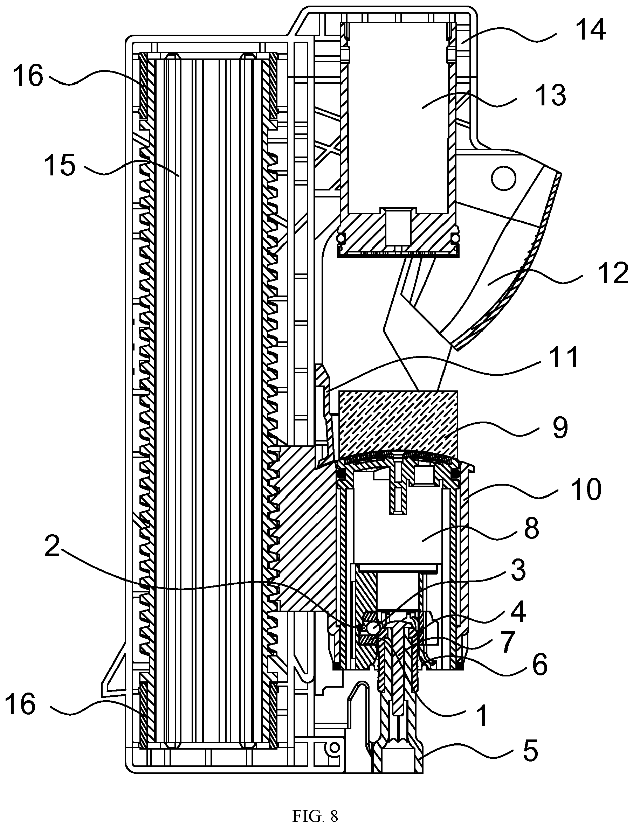

As shown in FIG. 8, the brewing cylinder 10 continues to move axially downward. At this moment, because the frictional force against the axial relative movement between the lower piston 8 and the brewing cylinder 10 is less than the resistance on the elastic assembly (namely, the elastic force applied by the elastic hoop 2 to the steel balls 3), the upper stop surface 4a blocks the steel balls 13 and keeps the lower piston 41 from moving downward together with the brewing cylinder 43, and the second movement mentioned in the section of "SUMMARY" starts. Additionally, at this moment, the brewing cylinder 10 continues to move axially downward, the lower piston moves relative to the brewing cylinder, and the coffee powder in the brewing chamber is ejected.

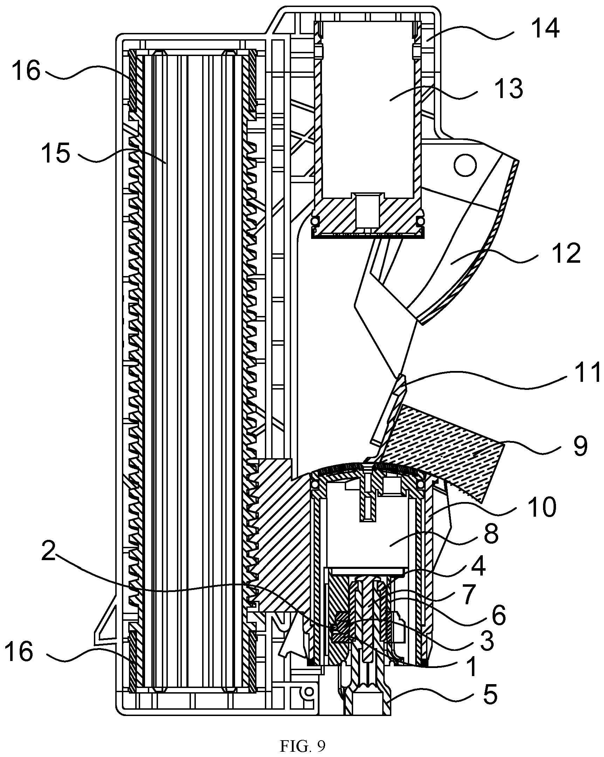

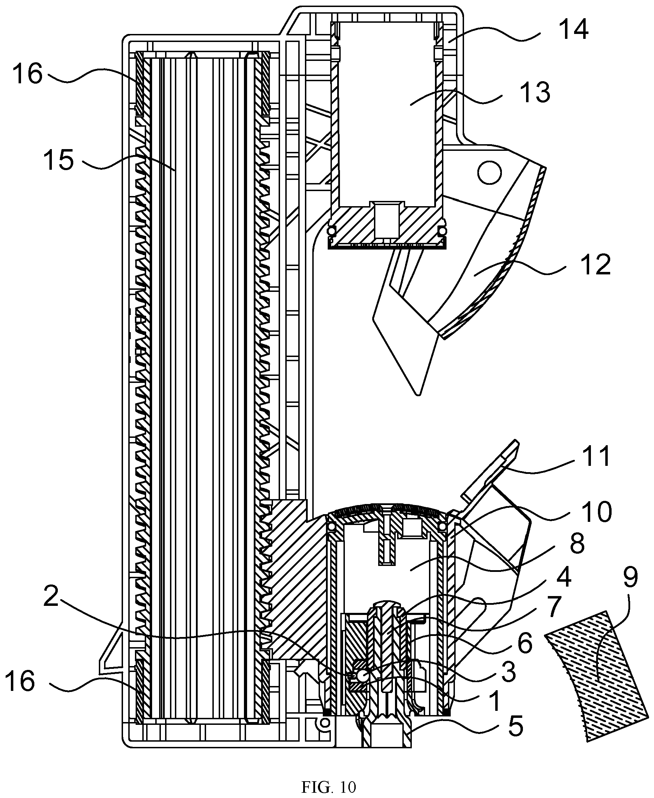

As shown in FIGS. 9 and 10, the driving screw 15 rotates counterclockwise further, the brewing cylinder 10 moves axially downward further, the lower piston 8 is just at the upper limit position of its axial movement relative to the brewing cylinder 10, the upper-limit-position portion of the lower piston 8 abuts against an end surface of the bottom of the brewing cylinder 10, and the upper end of the brewing cylinder is basically flush with the upper end of the lower piston. At this moment, the lower piston 8 is driven by brewing cylinder 10 to move axially downward together with the brewing cylinder 10 and starts the third movement. Since the value of the force caused by the downward axial movement of the brewing cylinder is greater than the value of the stop force of the elastic assembly, the steel balls 3 on the elastic assembly moves away radially (that is, the steel balls 3 of the elastic assembly push the elastic hoop 12 outward along the radial through holes so as to move away radially), and the steel balls 3 take a tangential frictional movement with the limiting cam 4 to pass through the body of the limiting cam 4 until the steel balls 3 of the elastic assembly move to a position where the steel balls 3 is lower than the lower stop surface 4b of the limiting cam 4. At this moment, the coffee powder 9 is scraped off from the brewing cylinder 10 by the residue-unloading member 11 in a rotating way. Hereto, as shown in FIG. 10, the actions of ejecting residue and removing residue are completed. The brewing cylinder 10 has moved to the lowermost end of the brewing apparatus, and the steel balls 3 return to their initial positions under the elastic action of the elastic hoop 12.

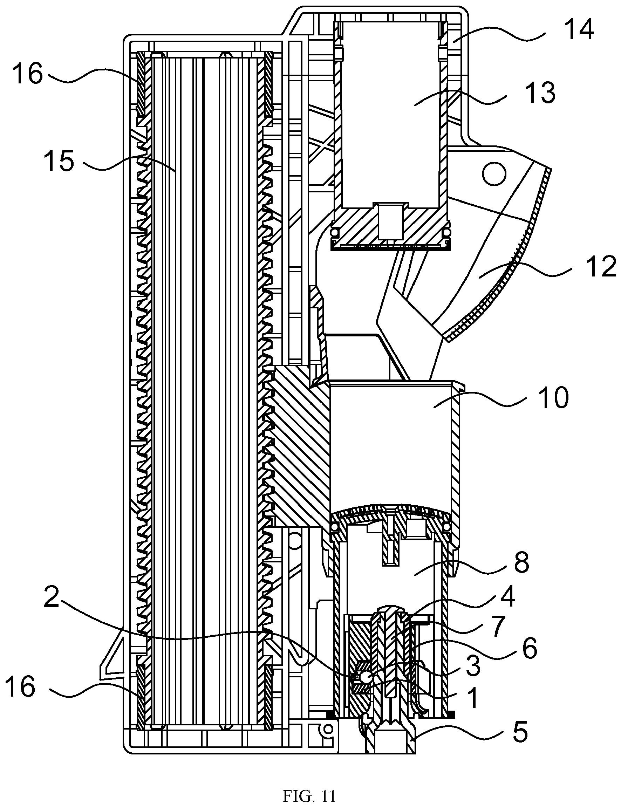

As shown in FIG. 11, the driving screw 15 rotates clockwise to drive the brewing cylinder 10 to move axially upward. At this moment, the lower piston 8 is located at the upper end of the brewing cylinder 10, and the steel balls 3 of the elastic assembly on the lower piston 8 is restricted by the lower stop surface 4b of the limiting cam 4. When the brewing cylinder 10 moves axially upward (that is, when the fourth movement occurs), since the lower piston 8 is blocked by the limiting cam 4, the velocity of the lower piston 8 increases slowly or the lower piston 8 stops completely, and the lower piston 8 does not move together with the brewing cylinder 10 synchronously. However, in this process, the brewing cylinder keeps moving upward relatively quickly, so that the lower piston moves relative to the brewing cylinder. When the lower-limit-position portion of the lower piston 8 abuts against a step surface in the hole of the brewing cylinder 10, the lower piston is at the lower limit position of its movement relative to the brewing cylinder. At this moment, the driving screw 15 stops rotating, and the brewing cylinder 10 stops moving axially, and the brewing apparatus of the coffee machine is restored to a filling position, the brewing apparatus has completed a whole set of actions including filling, pressing coffee powder, making coffee, ejecting residue, removing residue, and resetting the lower piston.

### Embodiment 2

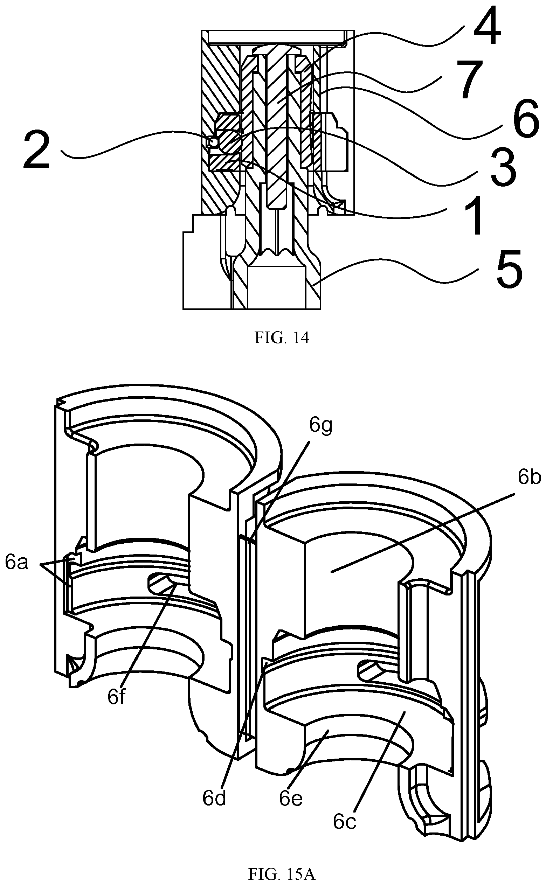

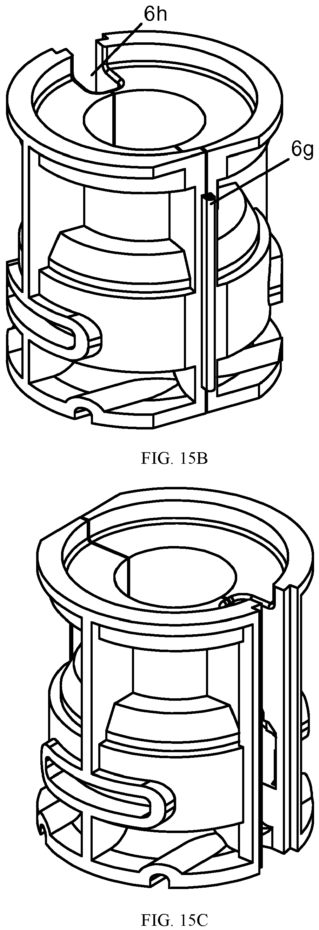

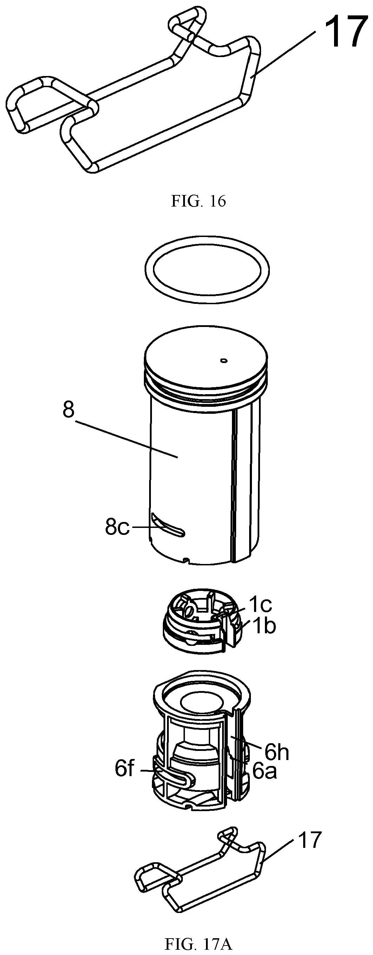

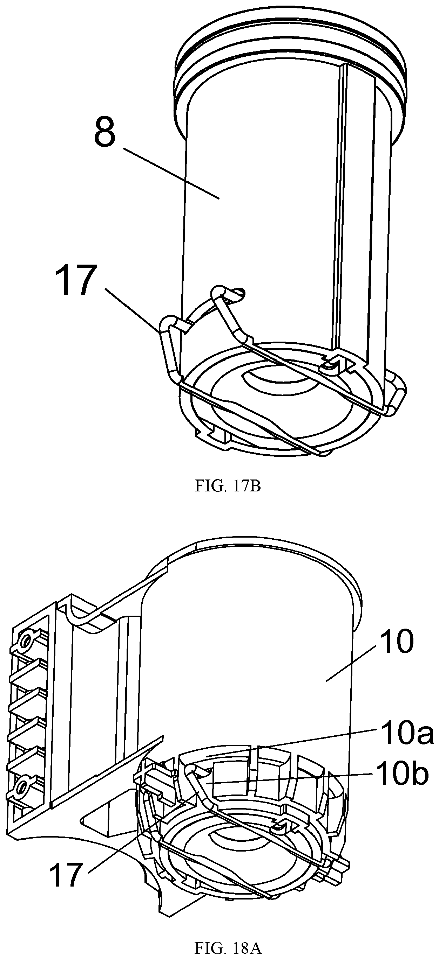

As shown in FIGS. 15A-15C and 17A, a difference between this embodiment and embodiment 1 is that: the stop elastic base 6 in this embodiment is a hollow cylindrical structure formed by closing two semi-cylinders which pivotably connect. A cavity matching the elastic assembly and accommodating the elastic assembly is provided in the hollow cylindrical structure. The pivot structure is simple and flexible, of course, the way of closing the two semi-cylinders is not limited to the pivot structure. As shown in FIGS. 15A-15C, a preferred specific structure of the stop elastic base 6 is as follows: the two semi-cylinders can rotate relative to each other through a pivoting portion 6g, a cavity 6c for mounting the elastic assembly is provided between an upper-section cylindrical hole 6b and a lower-section cylindrical hole 6e formed by closing the two semi-cylinders, and the cavity 6c matches the outer surface of the elastic base 1. The cavity 6c includes an annular groove 6d formed on the circumferential surface of the stop elastic base 6, and the annular groove 6d faces the elastic hoop 2 to provide a space for radial displacement of the elastic hoop 2when the diameter of the elastic hoop 2 increases. A bottom end of the upper cylindrical hole 6b and an upper end of the lower cylindrical hole 6e are respectively provided with positioning end faces for positioning the end faces of the elastic base 1.

The stop flange 1b of the elastic base abuts against a circumferential surface 6a of the two semi-cylinders of the stop elastic base 6 at a position where the recess 6h formed by closing the two semi-cylinders is located, they are used for a beverage pipeline to pass through and used to keep the elastic base 1 from rolling.

The upper-section cylindrical hole 6b is upwardly formed with a step with a diameter larger than the diameter of the upper-section cylindrical hole 6b.

The lower-section cylindrical hole 6e is downwardly formed with a contour with a diameter larger than the diameter of the lower-section cylindrical hole 6e.

Through the abovementioned structure of the stop elastic base 6 itself, the stop elastic base 6 keep the elastic assembly from rolling circumferentially and moving axially. Compared with traditional fixing ways such as interference fit or screws, the way to limit the elastic assembly circumferentially and axially by the stop elastic base of this structure has advantages of simple and reliable structure as well as convenient and quick assembly.

Additionally, the way to fix the stop elastic base 6, the elastic assembly, and the lower piston 8 is to use a limiting clamp 17 to fix them. As shown in FIG. 16, the limiting clamp 17 includes two clamping portions and a connecting portion connecting the two clamping portions and providing elasticity. The limiting clamp 17 has elasticity.

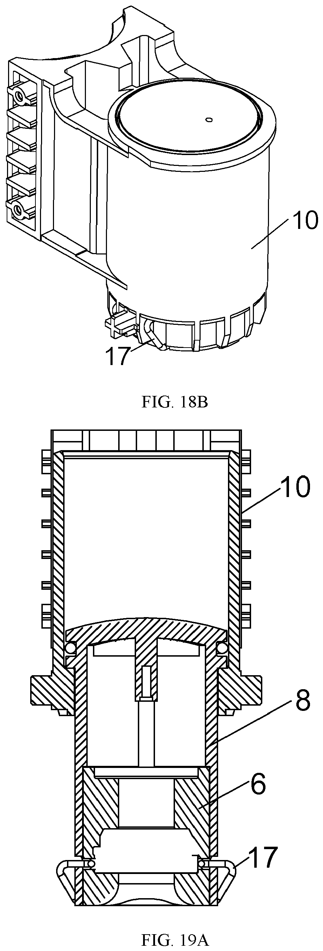

As shown in FIGS. 15A, 15B, 17A, 17B, 18A, 18B, 19A, and 19B, an outer circumference of the stop elastic base 6 is provided with two mounting holes (namely, arc-shaped grooves) 6f which are symmetrically arranged. The arc-shaped grooves are located to face the second boss If of the elastic base. The circumferential surface of the lower piston is provided with two arc-shaped grooves (namely, mounting holes) 8c correspondingly. The clamping portions of the limiting clamp 17 are embedded in the arc-shaped grooves and abuts against the elastic base 1 to tighten the stop elastic base 6 and fix the elastic assembly by the elasticity of the limiting clamp 17. One of the two ends of the limiting clamp 17 embedded in the arc-shaped grooves is of an open shape. Two grooves 10b are respectively provided on the two sides of the circumferential surface of the bottom of the brewing cylinder 10, and the limiting clamp 17 passes through the grooves 10b and abuts against an end surface 10a of the brewing cylinder 10 so as to act as a limiting flange. The connecting portion of the limiting clamp 17 is embedded in two parallel grooves at the bottom of the stop elastic base 6 and the bottom of the lower piston 8 so as to be fixed. The limiting clamp is not limited to the form shown in FIG. 16, for example, the connecting portion may be of an arc shape matching with the outer circumferential surface of the lower piston, and the clamping portions are embedded in the mounting holes of the lower piston. It is realized by using the limiting clamp to connect the elastic assembly, the stop elastic base 6, and the lower piston 8 detachably. Meanwhile, the limiting clamp 17 acts as a limiting flange to prevent the lower piston 8 from being disengaged from the brewing cylinder 10. In this way, the number of components can be reduced, and the fixation is reliable, it is easy to remove the lower piston from the brewing cylinder, one part is multi-purpose, the structure is simple, and the operation is convenient and flexible.

### Embodiment 3

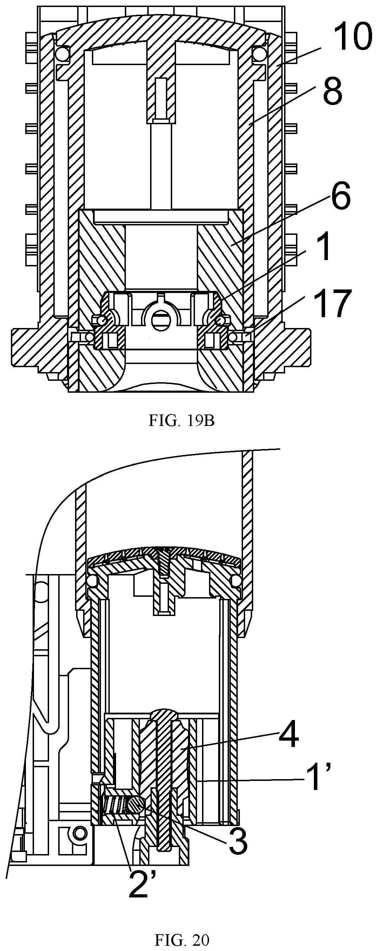

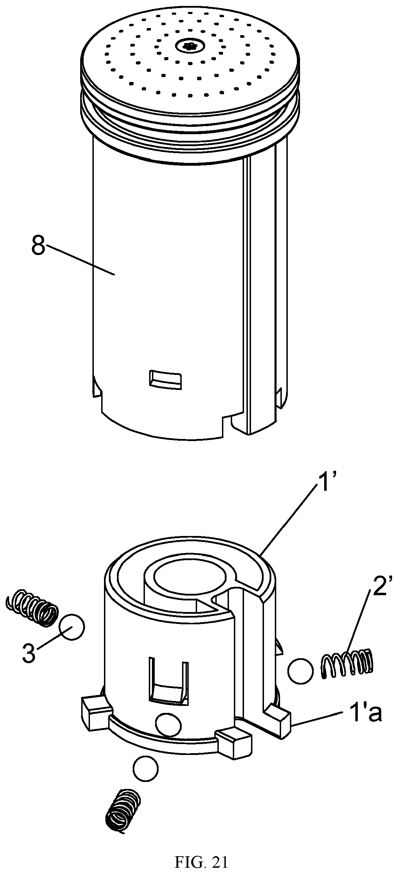

As shown in FIGS. 20 and 21, a difference from embodiment 1 is that: an elastic assembly includes an elastic element (which includes springs 2'), blocking elements (that is, steel balls 3), and an elastic base 1'. The elastic base 1' is provided with radial through holes for mounting the blocking elements (that is, steel balls 3) in the circumferential direction, and is further provided with an axial key groove in the circumferential direction, and is further provided with is provided with a flange 1'a at the bottom. The flange 1h is embedded in a groove at the lower end of the lower piston 8 to form a stop end surface for preventing the piston from being disengaged from the brewing cylinder. The elastic assembly is mounted in an inner hole of the lower piston 8 by means of interference fit or a fixing piece. Each spring 2' is pressed in a free state, one end abuts against the inner circumferential surface of the lower piston 8, and the other end abuts against its corresponding steel ball 3. The inner end of each steel ball 3 abuts, under the action of its corresponding spring 2', against the inner end of its corresponding radial through hole and radially protrudes into the inner cylindrical hole of the elastic base 1'. The diameter of each radial through hole reduces at its inner end to prevent its corresponding steel ball from being disengaged from the elastic base 1'.

### Embodiment 4

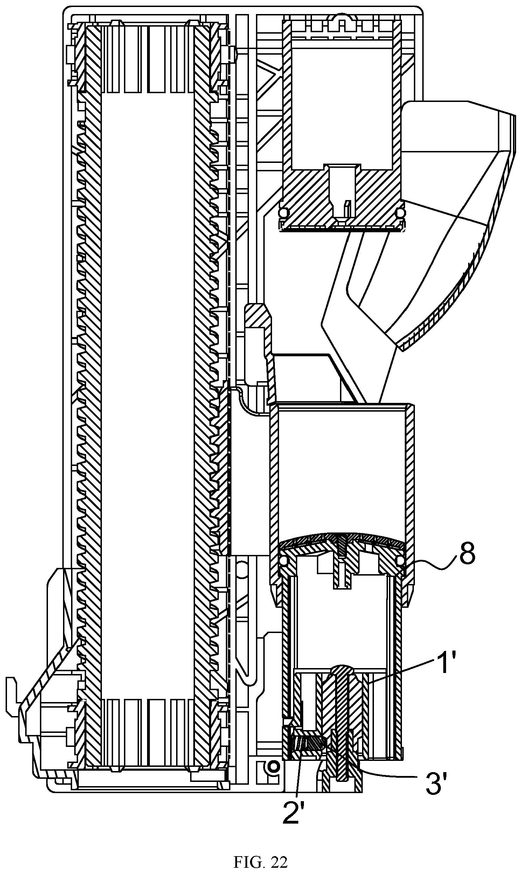

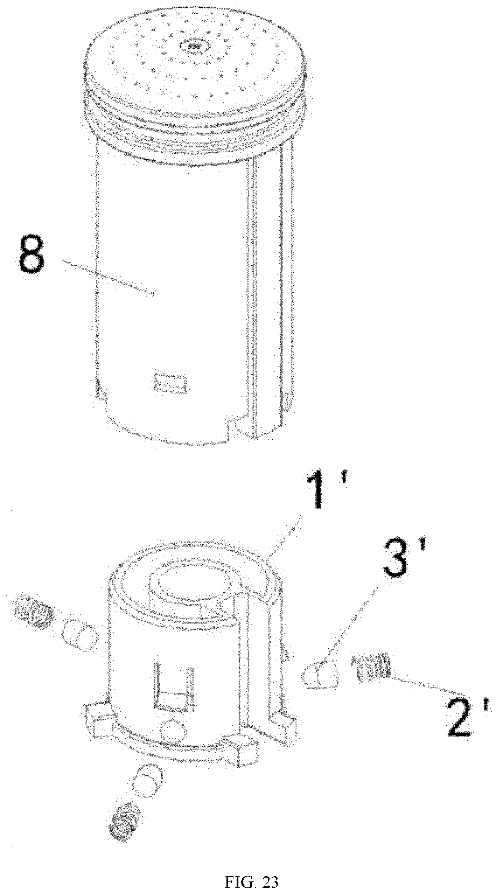

As shown in FIGS. 22 and 23, a different from embodiment 3 is that: blocking elements are column bodies 3' each of which is provided with a cambered surface at one end, and the column bodies 3' are respectively mounted in the radial through holes of the elastic base 1' in such a way as to be movable radially. One end of each spring 2' abuts against the inner surface of the lower piston to fix its corresponding column body 3' in the corresponding radial through hole. Each column body 3' has a radial elastic displacement outward when its inner end is pushed.

The diameter of the radial through hole is not less than the maximum diameter of the column body 3', so that the column body 3' can move in the radial through hole. The diameter of the radial through hole reduces at its inner end (that is, the end closer to the inner cylindrical hole), or the inner end of the radial through hole is provided a blocking portion, so that inward movement of the column body is limited and the column body can not be disengaged from the radial through hole. The elastic assembly is mounted in the inner hole of the lower piston 8. The springs 2' is pressed in a free state, and one end abuts against on the inner circumferential surface of the lower piston 8, and the other end abuts against the column body 3'. Under the action of the elastic force of the spring, the inner end of the column body 3' abuts against the edge of the inner end of the radial through hole, so that the cambered surface of the column body radially protrudes into the inner cylindrical hole of the elastic base 1'. The radial through hole provides a space for radial movement of the spring 2' and the column body 3'.

The fixation of the elastic assembly and the lower piston may be realized in conventional fixing ways such as interference fit or screws. Alternatively, the fixation of the elastic assembly and the lower piston may be realized by means of the aforementioned limiting clamp 17 to facilitate disassembly (not shown in the figure). In this case, the outer circumferential surface of the elastic assembly is provided with two arc-shaped grooves symmetrically, and arc-shaped grooves are correspondingly provided on the outer circumferential surface of the lower piston. The limiting clamp 17 is embedded into the arc-shaped grooves of the elastic assembly and the lower piston from both sides to clamp the elastic base, so as to realize the fixation of the lower piston 8 and the elastic assembly and act as a limiting flange.

### Embodiment 5

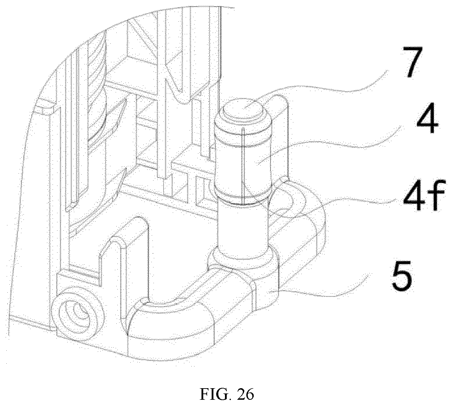

The aforementioned limiting cam that is fixedly mounted on the cam base will generate friction with the elastic assembly during relative movement between the limiting cam and the elastic assembly. Without exception, friction will lead to wear. Because the limiting cam is rigidly fixed, it will wear the same position every time (as shown in FIG. 26). The wear will undoubtedly greatly reduce the service life of the limiting cam, unless the limiting cam is made of high wear-resistant material. However, high wear-resistant material is expensive.

In this embodiment, by optimizing the way to combine the limiting cam, the operating state of the limiting cam and the elastic assembly will be changed, and the service life of the limiting cam will be improved.

Specifically, when the limiting cam 4 and a cam base 5 are combined, some suitable clearances are designed to ensure that the limiting cam has a certain degree of freedom. As a result, during the operation of the limiting cam and the elastic assembly, the position at which friction occurs can adaptively change every time. It is proved that this configuration can obviously increase the service life of the limiting cam.

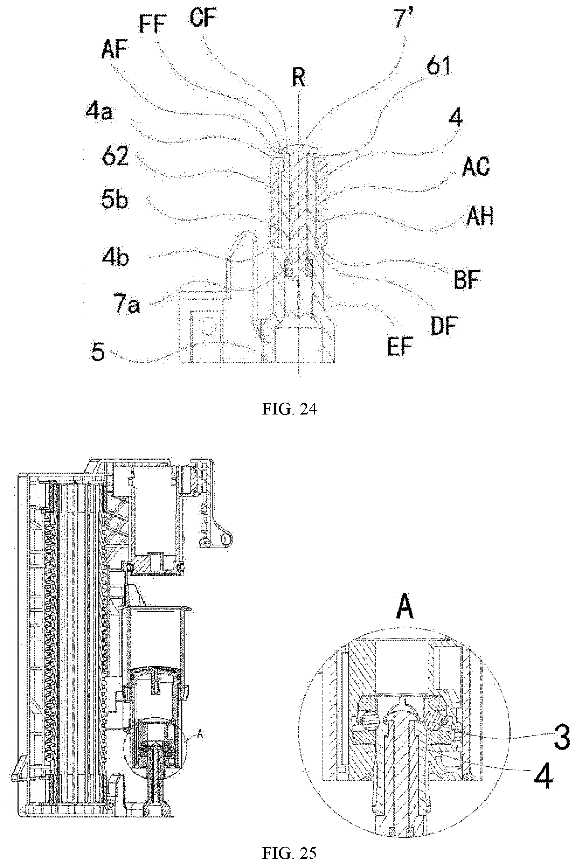

As shown in FIG. 24, it can be seen from the figure that: in this embodiment, the limiting mechanism includes a cam base 5, a limiting cam 4, a fixing bolt 7', and a fixing nut 7a. The limiting cam 4 is provided with an upper stop surface 4a, a lower stop surface 4b, and an inner hole AH. The cam base 5 is provided with a cylinder AC, a cam-positioning surface DF, a bolt-positioning surface CF, a nut-positioning surface EF, and a bolt-mounting hole 5b. The limiting cam 4 is mounted on the cylinder AC of the cam base 5 coaxially along an axis R, and a lower end surface BF of the limiting cam 4 coincides with an end surface DF of the cam base 5. The fixing bolt 7' is inserted into the bolt-mounting hole 5b to mounted on the cam base. An end surface FF of a pan head of the fixing bolt 7' and the bolt-positioning face CF of the cam base 5 are coincidently assembled together. The fixing nut 7a is threadedly fixed to a thread end of the fixing bolt 7'. The fixing nut 7a is mounted in such a way as to be in contact with the nut-positioning face EF of the cam base 5, thereby fixing the fixing bolt 7' to the cam base 5. There is a space between the end surface FF of the pan head of the fixing bolt 7' and the cam-positioning surface DF of the cam base 5, and the limiting cam 4 is mounted in this space. There is a clearance 61 between the end surface FF of the pan head and the upper end surface AF of the limiting cam 22. There is a clearance 62 between the inner hole of the limiting cam 22 and the cylinder AC of the cam base 5. With the help of these clearances, the limiting cam 4 is rotatable around the axis R.

The limiting mechanism is used in the first embodiment, and the movements of other components are the same as the first embodiment. As shown in FIG. 7, after brewing coffee, the driving screw 15 rotates counterclockwise to drive the brewing cylinder 10 to move axially downward. At this moment, the lower piston 8 moves downward together with the brewing cylinder 10. As mentioned above, the lower piston 8 can reciprocate axially relative to the brewing cylinder 10 between the upper limit position and the lower limit position. At this moment, the lower piston 8 is located at the lower end of the brewing cylinder 10. When the steel balls 3 of the elastic assembly contact the upper stop surface 4a of the limiting cam 4, a thrust F will be given to the limiting cam 4. Since the split elastic hoop 2 applies different elastic forces on the three steel balls, the three steel balls do not contact the upper stop surface of the limiting cam at the same time (as shown in FIG. 25). The three steel balls partially protrude into the inner cylindrical hole of the elastic base 1, and a center of a circle defined by ends of the three balls closer to the limiting cam is inconsistent with the center of the cylinder of the cam base 5, so that when the steel balls contact the limiting cam 4, a small torque will be applied to the limiting cam 4. This torque will make the limiting cam 4 rotate in a small range along the axis R, and then the lower piston 8 is blocked to stop moving downward, and the brewing cylinder 10 continues to move downward until the lower piston 8 is just at the upper limit position of its axial movement relative to the brewing cylinder 10 (as shown in FIG. 8).

As shown in FIG. 9, the brewing cylinder continues to move downward. At this moment, the lower piston 8 and the brewing cylinder 10 move together, and the steel balls 3 of the elastic assembly push the elastic hoop 2 radially outward along the radial through holes, and the steel balls perform tangential frictional movement relative to the limiting cam 4 until the steel balls 3 of the elastic assembly move to a position lower than the lower end of the lower stop surface 4b of the limiting cam 4. As mentioned above, because the limiting cam 4 rotates by a small range when the limiting cam 4 is in contact with the steel balls 3, the friction movement this time is not at the same position as the previous movement.

As shown in FIG. 10, the brewing cylinder 10 has run to the lowermost end of the brewing apparatus, and each steel ball 3 returns to the initial position under the elastic action of the elastic hoop 2. When the driving screw 15 rotates clockwise again, the brewing cylinder 10 is driven to move axially upward, and the steel balls 3 also move upward together. At this moment, the steel balls 3 are in contact with the lower stop surface 4b of the limiting cam 4 and applies a thrust F to the limiting cam 4. Under the action of the thrust F, the limiting cam 4 rotates along the axis R. The lower stop surface 4b blocks the steel balls 3 so as to keep the lower piston 8 from moving upward together with the brewing cylinder 10. At this moment, the lower piston 8 is located at the upper end of the brewing cylinder 10, and there is a certain displacement space relative to the brewing cylinder 10. When the brewing cylinder 10 moves axially upward, the lower piston 8 remains stationary, the brewing cylinder 10 continues to move upward until the lower piston 8 is just at the lower limit position of the movement of the lower piston 8 relative to the brewing cylinder 10 (as shown in FIG. 11), and the brewing cylinder stops moving. At this moment, the brewing apparatus completes a process of brewing coffee and returns to the filling position.

When the limiting cam is assembled with the cam base, it has certain degrees of freedom in the X-axis, Y-axis and Z-axis. The limiting cam is axially movable by a certain distance, meanwhile, it can rotate freely with a little external force.

When the elastic assembly is in contact with the limiting cam during the axial movement, the limiting cam rotates by a small range under the action of the thrust of the elastic assembly. Although the rotation angle is small, it will change the position of friction, which means that each time the position where friction occurs is not the same as the last.

If friction occurs at the same position every time, it will lead to serious wear of the limiting cam. In the present disclosure, since friction does not occurs at the same position every time, it will not cause a wear mark 4f shown in FIG. 26 on the limiting cam, thus the serve life of the limiting cam will be significantly improved without increasing cost or the number of parts.

The embodiments described above represent the necessary information to enable those skilled in the art to practice the invention, and illustrate the best mode of practicing the invention. Once the above description has been read in accordance with the accompanying drawings, those skilled in the art will understand the concepts of the present disclosure and will recognize applications of these concepts not specifically set forth herein. It should be understood that these concepts and applications fall within the scope of the present disclosure and appended claims.

## Claims

1. An residue-ej ecting and resetting assembly, applied to a beverage brewing apparatus, wherein the residue-ejecting and resetting assembly comprises an elastic assembly provided on an inner surface of a lower piston of the beverage brewing apparatus and a limiting mechanism used with the elastic assembly; the elastic assembly matches the limiting mechanism to block the lower piston and/or to cause relative movement between the lower piston and a brewing cylinder; **characterized in that**: the limiting mechanism comprises a limiting member made of rigid material and a limiting-member base on which the limiting member is mounted; the elastic assembly comprises a elastic element, blocking elements, and an elastic base; the elastic base is used to accommodate the elastic element and the blocking elements and used to fix the elastic element and the blocking elements in an inner cavity of the lower piston; the elastic element is mounted on an end side, which is an outer end side, of the blocking elements closer to the inner surface of the lower piston to apply an elastic force on the blocking elements; the blocking elements are made of rigid material, wherein:
the blocking elements are capable of partially abutting against the limiting member during movement of the lower piston under the elastic force of the elastic element, or the blocking elements are capable of being displaced as a whole in the elastic base under combined action of the elastic element and the limiting member made of rigid material, so as to block the lower piston and/or to cause relative movement between the lower piston and the brewing cylinder.

2. The residue-ejecting and resetting assembly of claim 1, wherein the elastic base is provided with an inner cylindrical hole matching an outer circumferential surface of the limiting member and one or more radial through holes arranged in a circumferential direction of the elastic base, the blocking elements are respectively mounted in the radial through holes of the elastic base in such a way as to be radially movable, an end of each blocking element closer to the inner cylindrical hole is provided with a cambered surface portion, and an end of each radial through hole closer to the inner cylindrical hole is provided with an blocking portion or a diameter of each radial through hole reduces at an end thereof closer to the inner cylindrical hole, so that the elastic element abuts against an end, which is an outer end, of each blocking element closer to the inner surface of the lower piston to cause the cambered surface portion to radially protrude into the inner cylindrical hole.

3. The residue-ejecting and resetting assembly of claim 2, wherein the limiting member is a rigid limiting cam, and an outer diameter of the limiting cam matches the inner cylindrical hole of the elastic base.

4. The residue-ejecting and resetting assembly of claim 3, wherein the limiting member comprises an upper stop surface and a lower stop surface; when the blocking elements contact the upper stop surface or the lower stop surface of the limiting member, an axial movement of the lower piston is blocked, so that the lower piston moves relative to the brewing cylinder; the elastic assembly is displaced between the upper stop surface and the lower stop surface of the limiting member, back and forth.

5. The residue-ejecting and resetting assembly of claim 4, wherein the upper stop surface and the lower stop surface of the limiting member are conical surfaces.

6. The residue-ejecting and resetting assembly of claim 5, wherein between the upper stop surface and the lower stop surface of the limiting member is a body of the limiting member, an outer surface of the body of the limiting member is a cylindrical surface, and part of the cylindrical surface is a concave curved surface.

7. The residue-ejecting and resetting assembly of claim 1 or 6, wherein a diameter of the inner cylindrical hole formed by an inner surface of the elastic base is greater than a maximum outer diameter of the limiting member.

8. The residue-ejecting and resetting assembly of claim 7, wherein the radial through holes are evenly arranged in the circumferential direction of the elastic base.

9. The residue-ejecting and resetting assembly of claim 8, wherein the blocking elements are rigid balls, or the blocking elements are rigid column bodies each of which is provided with the cambered surface portion at an end of each rigid column body closer to the limiting member.

10. The residue-ejecting and resetting assembly of claim 9, wherein the elastic element comprises springs, one end of each spring directly or indirectly abuts against the inner surface of the lower piston, and another end abuts against the end, which is the outer end, of a blocking element corresponding to each spring closer to the inner surface of the lower piston, so that the blocking elements partially protrude into the inner cylindrical hole of the elastic base.

11. The residue-ejecting and resetting assembly of claim 9, wherein the elastic element is an elastic hoop.

12. The residue-ejecting and resetting assembly of claim 11, wherein a circumferential groove which is concave inward is formed on an outer circumferential surface of the elastic base, the circumferential groove is used for receiving the elastic hoop, the radial through holes are provided at the circumferential groove, and the elastic hoop mounted in the circumferential groove keeps the blocking elements in the radial through holes.

13. The residue-ejecting and resetting assembly of claim 10 or 11, wherein the elastic base is provided with an axial key groove provided in the circumferential direction of the elastic base, and the axial key groove is used for a liquid pipeline to pass through.

14. The residue-ejecting and resetting assembly of claim 13, wherein the elastic assembly is mounted on the lower piston by a stop elastic base, the stop elastic base is a hollow cylindrical structure formed by closing two semi-cylinders, and the elastic assembly is fixed in the inner cavity of the lower piston by closing and fixing the two semi-cylinders.

15. The residue ejecting and resetting assembly of claim 14, wherein the stop elastic base is the hollow cylindrical structure formed by closing the two semi-cylinders which pivotably connect.

16. The residue-ejecting and resetting assembly of claim 15, wherein the stop elastic base has a cavity for accommodating the elastic assembly, two ends of the cavity are provided with step surfaces for limiting axial movement of the elastic assembly, two vertical sidewalls of the key groove of the elastic base of the elastic assembly extend outward and protrude from an outer surface of the elastic base of the elastic assembly to form a blocking flange, and the blocking flange abuts against the stop elastic base at a position where a recess formed by closing of the two semi-cylinders of the stop elastic base is located, for a liquid pipeline to pass through.

17. The residue-ejecting and resetting assembly of claim 16, wherein an annular groove is provided on an inner circumferential surface of the stop elastic base, and the annular groove is opposite to the elastic element and used to provide a space for the elastic element to move radially.

18. The residue-ejecting and resetting assembly of claim 17, wherein each of the two semi-cylinders is provided with a mounting hole for mounting a limiting clamp, the mounting hole for mounting the limiting clamp is used to match another mounting hole for mounting the limiting clamp provided on a circumferential surface of the lower piston, such that the limiting clamp is embedded into the mounting holes, thereby fixing the elastic assembly to the lower piston.

19. The residue-ejecting and resetting assembly of claim 1, wherein the limiting member is rotatably mounted on the limiting member base.

20. A beverage brewing apparatus, comprising a frame, an upper piston, a brewing cylinder, a lower piston, and a main driving shaft, wherein the upper piston is directly or indirectly fixed to the frame; the main driving shaft is rotatably supported by the frame; the brewing cylinder is mounted on the main driving shaft, and the lower piston is mounted in the brewing cylinder; the upper piston and the lower piston can close the brewing cylinder to form a brewing chamber driven by the main driving shaft; relative movement between the lower piston and the brewing cylinder is provided with an upper limit position and a lower limit position; **characterized in that**: the beverage brewing apparatus further comprises the residue-ejecting and resetting assembly according to any one of claims 1 to 6 and claim 19; the limiting-member base of the residue-ejecting and resetting assembly is mounted on a lower end of the frame.

21. The beverage brewing apparatus of claim 20, wherein a circumferential surface of a hollow cylinder of the lower piston is provided with an mounting hole for mounting a limiting clamp, and part of the limiting clamp protrudes from an outer circumferential surface of the lower piston to form a limiting flange used for abutting against a stop end surface of the brewing cylinder so as to keep the lower piston from moving upwards out of the brewing cylinder.

22. The beverage brewing apparatus of claim 21, wherein the limiting clamp is embedded into the mounting hole to fix the elastic assembly of the residue-ejecting and resetting assembly.

23. An elastic assembly, applied to a beverage brewing apparatus, **characterized in that**: the elastic assembly comprises an elastic element, blocking elements, and an elastic base; the elastic base is used to accommodate the elastic element and the blocking elements, and used to fix the elastic element and the blocking elements in an cavity of a lower piston of the beverage brewing apparatus; the elastic element is mounted on an end side, which is an outer end side, of the blocking elements closer to an inner surface of the lower piston to apply an elastic force on the blocking elements; the blocking elements are made of rigid material; the blocking elements are capable of partially abutting against a limiting member of the beverage brewing unit during movement of the lower piston under the elastic force of the elastic element, or the blocking elements are capable of being displaced as a whole in the elastic base under combined action of the elastic element and the limiting member, so as to block the lower piston and/or cause relative movement between the lower piston and a brewing cylinder.

24. The elastic assembly of claim 23, wherein the elastic base is formed with an inner cylindrical hole matching an outer circumferential surface of the limiting member and one or more radial through holes arranged in a circumferential direction of the elastic base, the blocking elements are respectively mounted in the radial through holes of the elastic base in such a way as to be radially movable, an end of each blocking element closer to the inner cylindrical hole is provided with a cambered surface portion, and an end of each radial through hole closer to the inner cylindrical hole is provided with an blocking portion or a diameter of each radial through hole reduces at an end thereof closer to the inner cylindrical hole, so that the elastic element abuts against an end, which is an outer end, of each blocking element closer to the inner surface of the lower piston to cause the cambered surface portion to radially protrude into the inner cylindrical hole.

25. The elastic assembly of claim 23 or 24, wherein the blocking elements are rigid balls, or the blocking elements are rigid column bodies each of which is provided with the cambered surface portion at an end of each rigid column body closer to the limiting member.

26. The elastic assembly of claim 25, wherein the elastic element is an elastic hoop.

27. The elastic assembly of claim 25, wherein the elastic element comprises springs.

28. The elastic assembly of claim 26, wherein a circumferential groove which is concave inward is formed on an outer circumferential surface of the elastic base, the circumferential groove is used for receiving the elastic hoop, the radial through holes are provided at the circumferential groove, and the elastic hoop mounted in the circumferential groove keeps the blocking elements in the radial through holes.

29. The elastic assembly of claim 23 or 24, wherein the elastic base is provided with an axial key groove provided in the circumferential direction of the elastic base, and the axial key groove is used for a liquid pipeline to pass through.

30. The elastic assembly of claim 29, wherein two vertical sidewalls of the key groove extend outward and protrude from an outer surface of the elastic base to form two a blocking flange.
